# FASCICULE DE BREVET EUROPEEN

(11) **EP 3 016 821 B1**
(45) Date de publication et mention de la délivrance du brevet: **11.12.2019**
(21) Numéro de dépôt: 14790125.0
(22) Date de dépôt: 01.07.2014
(51) Int. Cl.: B60R 5/04

(54) **SYSTÈME CACHE-BAGAGES POUR VÉHICULE AUTOMOBILE**
KOFFERRAUMABDECKUNGSSYSTEM FÜR KRAFTFAHRZEUG
LUGGAGE COVER SYSTEM FOR MOTOR VEHICLE

(30) Priorité: 02.07.2013 FR 1356453
(43) Date de publication de la demande: 11.05.2016
(73) Titulaire: PSA Automobiles SA, 78300 Poissy (FR)
(72) Inventeur: SCHIRMER, Vincent, F-90160 Perouse (FR)
(86) Numéro de dépôt international: PCT/FR2014/051685
(87) Numéro de publication internationale: WO 2015/001247

(56) Documents cités:
- FR-A1- 2 874 555
- FR-A1- 2 903 052
- FR-A1- 2 905 095
- US-A1- 2005 023 854

## Description

### Domaine de l'invention

La présente invention concerne d'une manière générale les véhicules automobiles de type break ou monospace. Elle vise en particulier un système cache-bagages pour un tel véhicule.

### Arrière-plan de l'invention

Les véhicules de type break ou monospace sont généralement dotés d'un dispositif de recouvrement du compartiment à bagages qui est constitué soit d'une tablette arrière s'étendant longitudinalement jusqu'à proximité de la lunette du hayon du véhicule, soit d'un rideau souple mobile entre une position enroulée à l'intérieur d'une cassette et une position déployée dans laquelle il s'étend longitudinalement jusqu'à proximité de la lunette du hayon du véhicule.

Malheureusement, lorsque les dossiers des sièges arrière sont réglables en translation longitudinale et/ou en inclinaison, une discontinuité de masquage peut apparaitre entre l'extrémité avant du dispositif et l'arrière du dossier de siège suivant la position occupée par ce siège.

La demande française FR 2,905,095 décrit un système cache-bagages comportant un dispositif de recouvrement constitué par un rideau souple enroulable à l'intérieur d'une cassette, et un panneau destiné à couvrir l'espace entre l'extrémité avant de la cassette et l'arrière du dossier de siège.

Le panneau de couverture comprend un volet arrière fixe, solidaire de la cassette, et un volet avant monté pivotant sur le volet arrière suivant un axe transversal et à l'encontre d'une force de rappel élastique, par l'intermédiaire d'une pluralité de lamelles métalliques élastiquement déformables qui sont disposées parallèlement l'une à l'autre et régulièrement espacées sur toute la largeur du panneau.

L'extrémité avant du panneau est en appui glissant le long de la face arrière du dossier du siège mobile, en formant un angle α inférieur à 90° entre le panneau, au niveau de son extrémité avant, et la face du siège arrière.

Dans la position la plus avancée et la plus redressée du dossier du siège arrière, ce dernier effleure l'extrémité avant du panneau et n'exerce donc aucun effort sur le volet avant de sorte que les deux volets du panneau sont alignés.

Lorsque le dossier est reculé et/ou incliné, il entraine dans son mouvement le volet avant du panneau qui va glisser vers le bas le long de la face arrière de ce dossier, en forçant les lamelles métalliques à se déformer en se pliant au niveau de l'axe transversal de pivotement.

Lorsque le dossier du siège arrière revient dans sa position la plus avancée et la plus redressée, le volet avant revient automatiquement dans sa configuration alignée avec le volet arrière grâce à la force de rappel exercée par les lamelles métalliques.

L'espace entre l'arrière du dossier de siège et la cassette est ainsi couvert en permanence quelle que soit la position adoptée par ce dossier.

Toutefois, ce type de panneau constitué de deux parties articulées par une pluralité de lamelles métalliques intégrées, engendre une augmentation importante du coût de fabrication du système cache-bagages qui empêche sa généralisation à l'ensemble des modèles de véhicules et en particulier à ceux d'entrée de gamme. Un autre système de cache-bagage avec une butée élastiquement déformable est divulgué par US 2005/0023854 A1.

### Objet et résumé de l'invention

La présente invention vise donc à fournir une solution plus économique permettant d'assurer en permanence la couverture du compartiment à bagages jusqu'au dossier du siège arrière.

Elle propose à cet effet, un système cache-bagages pour véhicule automobile comportant un dispositif de recouvrement prévu pour s'étendre longitudinalement jusqu'à proximité du hayon dudit véhicule de sorte à recouvrir une portion principale de son compartiment à bagages, et un panneau de couverture solidaire par son extrémité arrière dudit dispositif de recouvrement, ledit panneau de couverture étant apte à couvrir en permanence la portion complémentaire dudit compartiment située entre ledit dispositif de recouvrement et le dossier d'un siège arrière dudit véhicule réglable en translation longitudinale et/ou en inclinaison,
caractérisé en ce que ledit panneau de couverture est constitué par un volet rigide monté pivotant à l'avant dudit dispositif de recouvrement suivant un axe transversal, entre une position déployée correspondant à la configuration la plus avancée et la plus redressée dudit dossier, et une position rabattue correspondant à la configuration la plus reculée et la plus inclinée vers l'arrière dudit dossier,
ledit système comportant en outre au moins une butée de soutien, réalisée en un matériau élastiquement déformable, qui est solidaire dudit dispositif de recouvrement et exerce sur ledit volet une force de rappel le sollicitant en permanence vers ladite position déployée , la butée de soutien étant réalisée dans un élastomère de type EPDM présentant une dureté SHORE A comprise entre 30 et 90

Ainsi, grâce à son panneau de couverture dont la position s'ajuste de sorte à couvrir la portion complémentaire du compartiment située entre le dispositif de recouvrement et le dossier d'un siège arrière du véhicule, le système cache-bagages selon l'invention permet de recouvrir en permanence l'intégralité du compartiment à bagages du véhicule et ce, quelle que soit la configuration adoptée par le dossier d'un siège arrière.

D'autre part, du fait que ce panneau de couverture soit constitué d'un simple volet rigide articulé sur le dispositif de recouvrement et coopérant avec une butée de soutien réalisée en un matériau élastiquement déformable, ce système cache-bagages demeure particulièrement économique à la fabrication.

Selon des caractéristiques préférées de l'invention, prises seules ou en combinaison :
- ladite butée de soutien est venue de moulage à partir d'un matériau élastiquement déformable ;
- l;
- ladite butée de soutien comporte une embase plate dont la face arrière est plaquée fixement contre la face avant dudit dispositif de recouvrement, ainsi qu'un nez à section en U qui saille transversalement de la partie supérieure de ladite embase depuis sa face avant et supporte la face inférieure de l'extrémité arrière dudit volet ;

- ledit nez comporte deux parois supérieure et inférieure reliées par une voûte en arc de cercle qui forme l'extrémité avant de ladite butée, la face inférieure de l'extrémité arrière dudit volet reposant sur ladite paroi supérieure.
- ladite butée de soutien comporte également une cloison centrale s'étendant transversalement entre les deux dites parois supérieure et inférieure, ainsi que deux équerres prenant racine le long des arêtes latérales de la face avant de ladite embase et qui soutiennent ladite paroi inférieure ;
- ledit système cache-bagages comporte plusieurs dites butées de soutien, régulièrement espacées les unes des autres sur toute la largeur dudit dispositif de recouvrement ;
- l'extrémité libre dudit volet est constituée par une portion cylindrique encliquetée dans une rainure de forme complémentaire située à l'avant dudit dispositif de recouvrement et s'étendant suivant un axe transversal formant l'axe de pivotement dudit volet ;
- ledit dispositif de recouvrement comporte une cassette cache-bagages et un rideau souple monté mobile suivant une direction longitudinale, entre une position d'enroulement dans laquelle il est enroulé autour d'un enrouleur et rangé dans ladite cassette, et une position de recouvrement dans laquelle il est déroulé et s'étend longitudinalement jusqu'à proximité du hayon dudit véhicule ; et/ou
- ledit dispositif de recouvrement comporte une tablette arrière s'étendant longitudinalement jusqu'à proximité du hayon dudit véhicule.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 est une vue schématique en perspective du système cache-bagages selon un mode préféré de réalisation de l'invention ;
- la figure 2 est une vue schématique en perspective sous un autre angle du dispositif de recouvrement de compartiment à bagages que comporte le système cache-bagages de la figure 1 ;
- la figure 3 est une vue en perspective de l'une des butées de support montées sur la cassette du système cache-bagages de la figure 1 ;
- la figure 4 est une vue en perspective sous un autre angle de la butée de support de la figure 3 ;
- la figure 5 est une vue schématique en coupe selon l'axe longitudinal du véhicule, du système cache-bagages de la figure 1 lorsque le dossier de siège est complètement redressé et occupe sa position la plus avancée ;
- la figure 6 est une vue similaire à la figure 5 mais représentant le siège dans sa position la plus reculée et la plus inclinée vers l'arrière ; et
- la figure 7 est un agrandissement du détail VII de la figure 5.

### Description détaillée d'un mode de réalisation

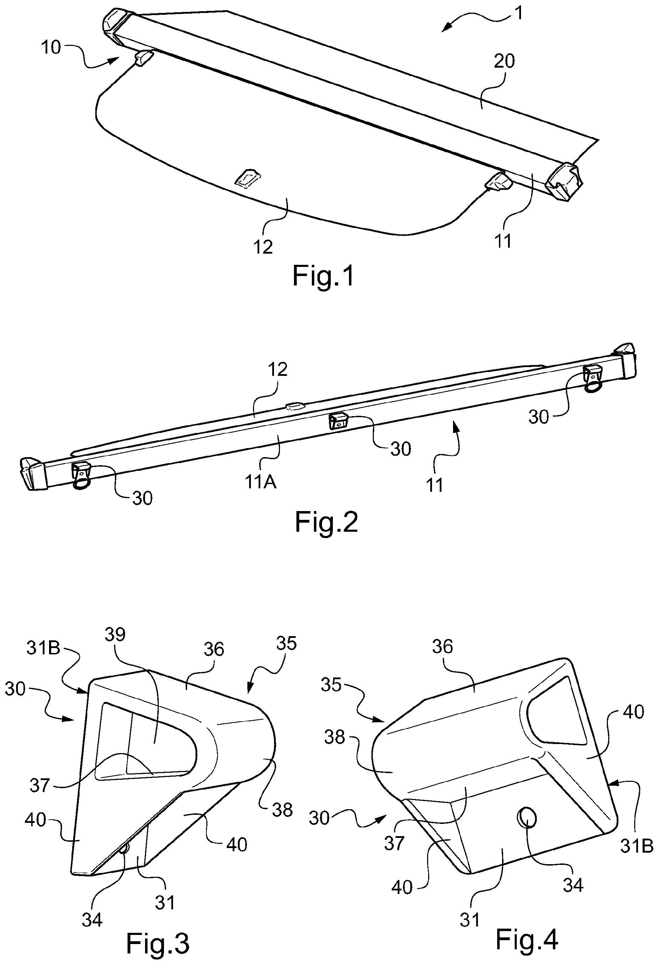

En référence aux figures 1, 2, 5 et 6, le système cache-bagages 1 pour véhicule automobile comporte un dispositif de recouvrement de compartiment à bagages 10, et un panneau de couverture constitué par un volet rigide 20 monté sur le dispositif de recouvrement 10 et qui couvre l'espace avant du coffre entre ce dispositif de recouvrement 10 et le dossier 2 d'un siège arrière.

Le dispositif de recouvrement 10 comporte une cassette cache bagages 11 disposée transversalement sur toute la largeur du compartiment à bagages entre les deux parois latérales arrières du véhicule auxquelles elle est fixée, et un rideau souple 12 de forme rectangulaire constitué de préférence d'un matériau opaque et imperméable tel qu'une toile imperméabilisée.

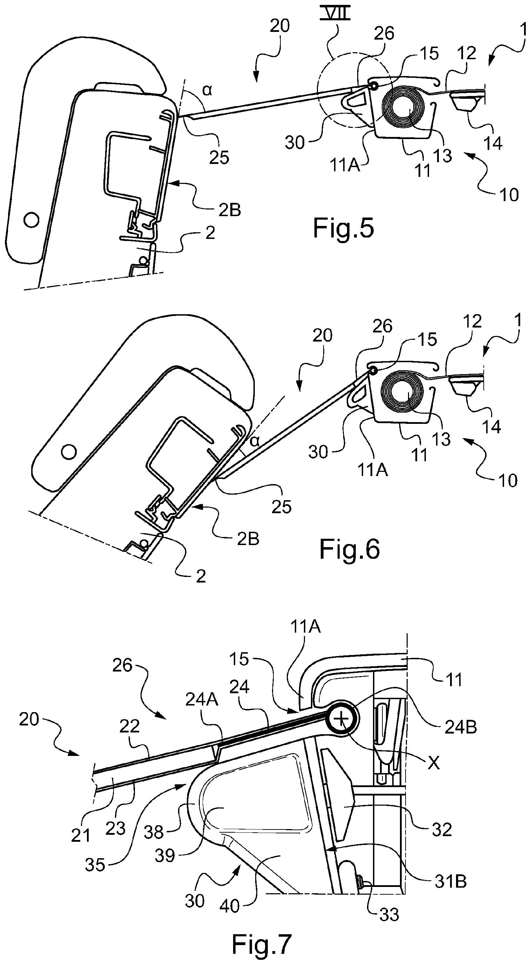

Ce rideau souple 12 est monté mobile suivant une direction longitudinale, entre une position d'enroulement dans laquelle il est enroulé autour d'un enrouleur 13 et rangé dans la cassette 11 comme illustré par les figures 5 et 6, et une position de recouvrement dans laquelle il est déroulé et s'étend longitudinalement jusqu'à proximité de la lunette du hayon du véhicule de sorte à recouvrir la portion du compartiment à bagages située à l'arrière de la cassette 11.

L'extrémité libre du rideau souple 12 comporte un moyen de préhension constitué ici par un anneau 14 permettant de faciliter sa saisie par l'utilisateur souhaitant le dérouler pour l'amener dans sa position de recouvrement.

Le volet comprend un corps 21 rigide, réalisé de préférence en un matériau composite de fibres de bois de type MDF ou en matière plastique, et dont les faces supérieure et inférieure sont recouvertes par deux moquettes respectives 22 et 23 (figure 7).

Le volet 20 comprend également un profilé rigide 24 venu de moulage à partir d'un matériau plastique et disposé dans le prolongement arrière du corps 21.

Le profilé 24 comporte une portion plane 24A prise en sandwich entre les deux extrémités arrière des moquettes 22 et 23 auxquelles elle est soudée par soudage laser, ainsi qu'une portion cylindrique d'extrémité 24B qui est encliquetée dans une rainure 15 de forme complémentaire, ménagée sur la paroi avant 11A de la cassette 11 à proximité de son arête supérieure et s'étendant sur toute sa largeur, de sorte que le volet 20 est monté pivotant sur cette cassette 11 suivant l'axe transversal X de cette rainure 15.

L'extrémité avant 25 du volet 20 est légèrement courbée vers le bas de façon à être en appui glissant le long de la face arrière 2B du dossier 2 en formant avec cette dernière un angle d'inclinaison, repéré par α sur les figures 5 et 6, qui est inférieur à 90° et dont la valeur varie en fonction de la position longitudinale et de l'inclinaison de ce dossier 2.

Le système cache-bagages 1 comporte également trois butées de soutien 30 venues de moulage à partir d'un matériau élastiquement déformable, de préférence un élastomère de type EPDM (éthylène-propylène-diène monomère) présentant une dureté SHORE A comprise entre 30 et 90.

Les butées de soutien 30 sont fixées sur la paroi avant 11A de la cassette 11 en étant régulièrement espacées les unes des autres sur toute la largeur de cette cassette 11 (figure 2).

On va maintenant décrire plus en détails ces butées 30 à l'appui des figures 3 et 4.

Chacune d'elles comporte une embase plate 31 de forme carrée dont la face arrière 31B est plaquée fixement contre la face avant du dispositif de recouvrement 10 par l'intermédiaire d'un ergot d'encliquetage 32 (visible sur la figure 7) prenant racine sur la partie supérieure de cette face arrière 31B et qui est clipsé dans une ouverture correspondante ménagée sur la paroi avant 11A de la cassette 11.

De préférence, et afin d'éviter tout mouvement de rotation des butées 30 autour des ergots 32, ces dernières sont également vissées sur la paroi avant 11A de la cassette 11 à l'aide de vis respectives 33.

Chacune de ces vis 33 traverse ainsi successivement une première ouverture circulaire 34 ménagée dans l'embase 31 d'une butée 30 à l'aplomb de l'ergot 32, puis une seconde ouverture circulaire correspondante ménagée sur la paroi avant 11A de la cassette 11 (non visible sur les figures), avant d'être ensuite boulonnée contre la face interne de cette paroi avant 11A (figure 7).

Chaque butée de soutien 30 comporte également un nez 35 à section en U qui saille transversalement de la partie supérieure de l'embase 31 depuis sa face avant 31A, et supporte la face inférieure de l'extrémité arrière 26 du volet 20.

Le nez 35 comporte une paroi supérieure plane 36 prenant racine le long de l'arête supérieure de la face avant 31A, et une paroi inférieure 37 également plane et prenant racine au dessus de l'ouverture 34, les deux parois 36 et 37 s'étendant vers l'avant en se rapprochant légèrement l'une de l'autre jusqu'à une voute en arc de cercle 38 qui relie leurs extrémités distales et forme l'extrémité avant de la butée 30.

Comme illustré sur la figure 3, la butée 30 comporte également une cloison centrale 39 s'étendant transversalement entre les deux parois 36, 37, ainsi que deux équerres support 40 prenant racine le long des arêtes latérales de la face avant 31A de l'embase 31 et qui soutiennent la paroi inférieure 37 du nez 35.

Comme illustré par la figure 7, les parois supérieures plans 36 des trois butées 30 s'étendent légèrement inclinées vers l'avant depuis la paroi avant 11A de la cassette 11 et juste en dessous de l'axe de pivotement du volet 20 constitué par l'axe transversal X de la rainure 15, de sorte que la face inférieure de l'extrémité arrière 26 du volet 20 repose sur ces trois parois supérieures 36.

On va maintenant décrire le fonctionnement du système cache-bagages 1 selon l'invention.

Dans la configuration la plus avancée et la plus redressée du dossier 2 illustrée par la figure 5, ce dernier effleure l'extrémité avant 25 du volet 20 et n'exerce donc aucun effort sur lui. Ainsi, en l'absence d'autres contraintes, le volet 20 occupe sa position déployée où l'angle α est maximal et vers laquelle il est sollicité en permanence par la force de rappel exercée contre la face inférieure de son extrémité arrière 26 par les trois butées de soutien 30.

Lorsque le dossier 2 est reculé et/ou incliné, il entraine dans son mouvement le volet 20 qui se rabat en pivotant autour de l'axe X et dont l'extrémité avant 25 glisse vers le bas le long de la face arrière 2B de ce dossier 2.

Ce rabattement du volet 20 contraint les butées de soutien 30 à se déformer élastiquement, notamment au niveau de leurs nez 35 qui s'inclinent vers le bas.

La figure 6 illustre la configuration la plus reculée et la plus inclinée vers l'arrière du dossier 2. Le volet 20 occupe alors sa position rabattue où l'angle α est minimal tandis que la déformation élastique des butées de soutien 30 est maximale.

Lorsque le dossier 2 de siège est avancé et/ou redressé depuis la configuration de la figure 6 ou une configuration intermédiaire, la force de rappel exercée sur l'extrémité arrière 26 du volet 20 par les butées de soutien 30 cherchant à retrouver leur forme d'origine, entraine le pivotement du volet 20 vers le haut autour de l'axe X tandis que son l'extrémité avant 25 glisse le long de la face arrière 2B du dossier 2.

Quant ce dossier 2 atteint de nouveau sa configuration la plus avancée et la plus redressée, plus aucun effort n'est exercé par ce dossier sur l'extrémité avant 25 du volet 20, de sorte que les butées de soutien 30 reprennent leur forme d'origine en rappelant le volet 20 dans sa position déployée représentée sur la figure 5.

Le système cache-bagages 1 selon l'invention permet ainsi de couvrir en permanence l'espace entre l'arrière du dossier 2 de siège et la cassette 11 et ce, quelle que soit la configuration adoptée par ce dossier 2.

Selon une variante de réalisation non représentée, le dispositif de recouvrement comporte en lieu et place de la cassette 11 et du rideau 12, une tablette arrière s'étendant longitudinalement jusqu'à proximité de la lunette du hayon du véhicule et sur l'extrémité avant de laquelle le volet 20 est monté pivotant selon un axe transversal.

Selon d'autres variantes de réalisation non représentée, la forme, le nombre et/ou l'agencement des butées de soutien sur la cassette sont différents du mode de réalisation qui vient d'âtre décrit.

## Revendications

1. Système cache-bagages pour véhicule automobile comportant un dispositif de recouvrement (10) prévu pour s'étendre longitudinalement jusqu'à proximité du hayon dudit véhicule de sorte à recouvrir une portion principale de son compartiment à bagages, et un panneau de couverture (20) solidaire par son extrémité arrière (26) dudit dispositif de recouvrement (10), ledit panneau de couverture (20) étant apte à couvrir en permanence la portion complémentaire dudit compartiment située entre ledit dispositif de recouvrement (10) et le dossier (2) d'un siège arrière dudit véhicule réglable en translation longitudinale et/ou en inclinaison, où ledit panneau de couverture est constitué par un volet rigide (20) monté pivotant à l'avant dudit dispositif de recouvrement (10) suivant un axe transversal (X), entre une position déployée correspondant à la configuration la plus avancée et la plus redressée dudit dossier (2), et une position rabattue correspondant à la configuration la plus reculée et la plus inclinée vers l'arrière dudit dossier (2), **caractérisé en ce que** ledit système comporte en outre au moins une butée de soutien (30), réalisée en un matériau élastiquement déformable, qui est solidaire dudit dispositif de recouvrement (10) et exerce sur ledit volet (20) une force de rappel le sollicitant en permanence vers ladite position déployée, et **en ce que** ladite butée de soutien (30) est réalisée dans un élastomère de type EPDM présentant une dureté SHORE A comprise entre 30 et 90.

2. Système cache-bagages selon la revendication 1, **caractérisé en ce que** ladite butée de soutien (30) est venue de moulage à partir d'un matériau élastiquement déformable.

3. Système cache-bagages selon l'une des revendications 1 à 2, **caractérisé en ce que** ladite butée de soutien (30) comporte une embase plate (31) dont la face arrière (31B) est plaquée fixement contre la face avant dudit dispositif de recouvrement (10), ainsi qu'un nez (35) à section en U qui saille transversalement de la partie supérieure de ladite embase (31) depuis sa face avant (31A) et supporte la face inférieure de l'extrémité arrière (26) dudit volet (20).

4. Système cache-bagages selon la revendication 3, **caractérisé en ce que** ledit nez (35) comporte deux parois supérieure (36) et inférieure (37) reliées par une voute en arc de cercle (38) qui forme l'extrémité avant de ladite butée (35), la face inférieure de l'extrémité arrière (26) dudit volet (20) reposant sur ladite paroi supérieure (36).

5. Système cache-bagages selon la revendication 4, **caractérisé en ce que** ladite butée de soutien (35) comporte également une cloison centrale (39) s'étendant transversalement entre les deux dites parois supérieure (36) et inférieure (37), ainsi que deux équerres (40) prenant racine le long des arêtes latérales de la face avant (31A) de ladite embase (31) et qui soutiennent ladite paroi inférieure (37).

6. Système cache-bagages selon l'une des revendications 1 à 5, **caractérisé en ce qu'**il comporte plusieurs dites butées de soutien (35), régulièrement espacées les unes des autres sur toute la largeur dudit dispositif de recouvrement (10).

7. Système cache-bagages selon l'une des revendications 1 à 6, **caractérisé en ce que** ledit volet comporte une portion cylindrique d'extrémité (24B) encliquetée dans une rainure de forme complémentaire (15) située à l'avant dudit dispositif de recouvrement (10) et s'étendant suivant un axe transversal (X) formant l'axe de pivotement dudit volet (20).

8. Système cache-bagages selon l'une des revendications 1 à 7, **caractérisé en ce que** ledit dispositif de recouvrement (10) comporte une cassette cache-bagages (11) et un rideau souple (12) monté mobile suivant une direction longitudinale, entre une position d'enroulement dans laquelle il est enroulé autour d'un enrouleur (13) et rangé dans ladite cassette (11), et une position de recouvrement dans laquelle il est déroulé et s'étend longitudinalement jusqu'à proximité du hayon dudit véhicule.

9. Système cache-bagages selon l'une des revendications 1 à 7, **caractérisé en ce que** ledit dispositif de recouvrement comporte une tablette arrière s'étendant longitudinalement jusqu'à proximité du hayon dudit véhicule.

## Patentansprüche

1. Gepäckabdeckungssystem für ein Kraftfahrzeug, umfassend eine Abdeckvorrichtung (10), die vorgesehen ist, um sich längs bis in die Nähe der Heckklappe des Fahrzeugs zu erstrecken, so dass ein Hauptabschnitt seines Gepäckfaches abgedeckt wird, und eine Deckplatte (20), die über ihr hinteres Ende (26) fest mit der Abdeckvorrichtung (10) verbunden ist, wobei die Deckplatte (20) geeignet ist, den Zusatzabschnitt des Faches dauerhaft zu bedecken, der sich zwischen der Abdeckvorrichtung (10) und der Lehne (2) eines Rücksitzes des Fahrzeugs befindet, der in der Längsverschiebung und/oder in der Neigung verstellbar ist,
wobei die Deckplatte von einem starren Flügel (20) gebildet wird, der schwenkbar an der Vorderseite der Abdeckvorrichtung (10) gemäß einer Querachse (X) zwischen einer ausgefahrenen Position, die der vordersten und aufrechtesten Ausgestaltung der Lehne (2) entspricht, und einer hinuntergeklappten Position, die der hintersten und zurückgeneigtesten Ausgestaltung der Lehne (2) entspricht, montiert ist,
**dadurch gekennzeichnet, dass** das System weiter mindestens einen Stützanschlag (30) umfasst, der aus einem elastisch verformbaren Material hergestellt ist, der fest mit der Abdeckvorrichtung (10) verbunden ist und auf den Flügel (20) eine Rückstellkraft ausübt, die ihn dauerhaft in die ausgefahrene Position vorspannt, und dadurch, dass der Stützanschlag (30) aus einem Elastomer vom Typ EPDM hergestellt ist, das eine SHORE-A-Härte zwischen 30 und 90 aufweist.

2. Gepäckabdeckungssystem nach Anspruch 1, **dadurch gekennzeichnet, dass** der Stützanschlag (30) einstückig geformt ist aus einem elastisch verformbaren Material.

3. Gepäckabdeckungssystem nach einem der Ansprüche 1 bis 2, **dadurch gekennzeichnet, dass** der Stützanschlag (30) einen flachen Unterteil (31) umfasst, dessen hintere Fläche (31B) fest gegen die vordere Fläche der Abdeckvorrichtung (10) gepresst ist, sowie eine Nase (35) mit einem Querschnitt in U-Form, die quer vom oberen Teil des Unterteils (31) aus seiner vorderen Fläche (31A) vorragt und die untere Fläche des hinteren Endes (26) des Flügels (20) trägt.

4. Gepäckabdeckungssystem nach Anspruch 3, **dadurch gekennzeichnet, dass** die Nase (35) zwei obere (36) und untere (37) Wände umfasst, die durch eine Kreisbogenwölbung (38) verbunden sind, die das vordere Ende des Anschlags (35) bildet, wobei die untere Fläche des hinteren Endes (26) des Flügels (20) auf der oberen Wand (36) aufliegt.

5. Gepäckabdeckungssystem nach Anspruch 4, **dadurch gekennzeichnet, dass** der Stützanschlag (35) ebenfalls eine Mittelwand (39) umfasst, die sich quer zwischen den zwei oberen (36) und unteren (37) Wänden erstreckt, sowie zwei Winkel (40), die ihren Ursprung entlang den seitlichen Graten der vorderen Fläche (31A) des Unterteils (31) nehmen und die die untere Wand (37) stützen.

6. Gepäckabdeckungssystem nach einem der Ansprüche 1 bis 5, **dadurch gekennzeichnet, dass** es mehrere Stützanschläge (35) umfasst, die über die gesamte Breite der Abdeckvorrichtung (10) regelmäßig voneinander beabstandet sind.

7. Gepäckabdeckungssystem nach einem der Ansprüche 1 bis 6, **dadurch gekennzeichnet, dass** der Flügel einen zylindrischen Endabschnitt (24B) umfasst, der in einer Nut komplementärer Form (15) eingerastet ist, die sich an der Vorderseite der Abdeckvorrichtung (10) befindet und sich gemäß einer Querachse (X) erstreckt, die die Schwenkachse des Flügels (20) bildet.

8. Gepäckabdeckungssystem nach einem der Ansprüche 1 bis 7, **dadurch gekennzeichnet, dass** die Abdeckvorrichtung (10) eine Gepäckabdeckungskassette (11) und eine biegsame Blende (12) umfasst, die beweglich gemäß einer Längsrichtung, zwischen einer Aufwicklungsposition, in der sie um einen Straffer (13) aufgewickelt und in der Kassette (11) verstaut ist, und einer Abdeckposition, in der sie abgewickelt ist und sich längs bis in die Nähe der Heckklappe des Fahrzeugs erstreckt, montiert ist.

9. Gepäckabdeckungssystem nach einem der Ansprüche 1 bis 7, **dadurch gekennzeichnet, dass** die Abdeckvorrichtung ein hinteres Tablett umfasst, das sich längs bis in die Nähe der Heckklappe des Fahrzeugs erstreckt.

## Claims

1. Luggage cover system for a motor vehicle comprising a device for covering (10) provided to extend longitudinally to the vicinity of the hatchback of said vehicle in such a way as to cover a main portion of the luggage compartment thereof, and a covering panel (20) secured by the rear end (26) thereof to said device for covering (10), said covering panel (20) being able to permanently cover the complementary portion of said compartment located between said device for covering (10) and the backrest (2) of a rear seat of said vehicle adjustable in longitudinal translation and/or in inclination,
wherein said covering panel is formed by a rigid flap (20) that is mounted so as to pivot at the front of said device for covering (10) along a transversal axis (X), between a deployed position corresponding to the furthest forward and most upright configuration of said backrest (2), and a folded-down position corresponding to the furthest back and most rearwardly inclined configuration of said backrest (2),
**characterised in that** said system further comprises at least one supporting stop (30), made of an elastically deformable material, which is secured to said device for covering (10) and exerts a return force on said flap (20) permanently urging it toward said deployed position, and **in that** said supporting stop (30) is made of an elastomer of the EPDM type having a SHORE A hardness between 30 and 90.

2. Luggage cover system according to claim 1, **characterised in that** said supporting stop (30) is from moulding from an elastically deformable material.

3. Luggage cover system according to one of claims 1 to 2, **characterised in that** said supporting stop (30) comprises a flat base (31) of which the rear face (31B) is fixedly thrust against the front face of said device for covering (10), as well as a nose (35) with a U-shaped section that transversally protrudes from the upper portion of said base (31) from the front face (31A) thereof and supports the lower face of the rear end (26) of said flap (20).

4. Luggage cover system according to claim 3, **characterised in that** said nose (35) comprises two upper (36) and lower (37) walls connected by a semi-circular vault (38) that forms the front end of said stop (35), the lower face of the rear end (26) of said flap (20) resting on said upper wall (36).

5. Luggage cover system according to claim 4, **characterised in that** said supporting stop (35) also comprises a central partition (39) extending transversally between the two said upper (36) and lower (37) walls, as well as two brackets (40) taking root along lateral edges of the front face (31A) of said base (31) and which support said lower wall (37).

6. Luggage cover system according to one of claims 1 to 5, **characterised in that** it comprises several said supporting stops (35), evenly spaced from one another over the entire width of said device for covering (10).

7. Luggage cover system according to one of claims 1 to 6, **characterised in that** said flap comprises a cylindrical end portion (24B) snap-fitted into a groove of complementary shape (15) located at the front of said device for covering (10) and extending along a transversal axis (X) forming the pivot axis of said flap (20).

8. Luggage cover system according to one of claims 1 to 7, **characterised in that** said device for covering (10) comprises a luggage cover cassette (11) and a flexible curtain (12) mounted mobile along a longitudinal direction, between a wound position in which it is wound around a winder (13) and stored in said cassette (11), and a covering position in which it is unwound and extends longitudinally to the vicinity of the hatchback of said vehicle.

9. Luggage cover system according to one of claims 1 to 7, **characterised in that** said device for covering comprises a rear shelf extending longitudinally to the vicinity of the hatchback of said vehicle.
